# EUROPÄISCHE PATENTSCHRIFT

(11) **EP 0 658 308 B1**
(45) Veröffentlichungstag und Bekanntmachung des Hinweises auf die Patenterteilung: **02.12.1998**
(21) Anmeldenummer: 93922099.2
(22) Anmeldetag: 02.09.1993
(51) Int. Cl.: A01N 47/36

(54) **HERBIZIDE ZUSAMMENSETZUNG UND VERFAHREN ZUR BEKÄMPFUNG UNERWÜNSCHTER VEGETATION**
HERBICIDAL COMPOSITION AND METHOD OF CONTROLLING UNWANTED VEGETATION
COMPOSITION HERBICIDE ET PROCEDE DE LUTTE CONTRE LA VEGETATION INDESIRABLE

(30) Priorität: 04.09.1992 RU 5061695
(43) Veröffentlichungstag der Anmeldung: 21.06.1995
(73) Patentinhaber: R&D KARE INTERNATIONAL, INC., Van Nuys, CA 91411 (US)
(72) Erfinder: Sorokin, Vladimir Iosifovich, Moscow, 125284 (RU)
(74) Vertreter: von Füner, Alexander, Prof.h.c. Dr.
(86) Internationale Anmeldenummer: RU9300211
(87) Internationale Veröffentlichungsnummer: WO9405155

(56) Entgegenhaltungen:
- EP-A- 0 108 237
- EP-A- 0 448 723
- FR-A- 2 440 158
- Keine weiteren einschlägigen Dokumente gefunden

## Beschreibung

Bekannt ist die Anwendung von Sulfonylharnstoffderivaten der Formel 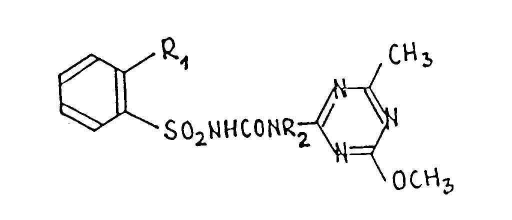 worin R₁ = Cl, CO₂CH₃, OCH₂CH₂Cl und R₂ = H, CH₃ bedeutet, als Herbizide zur Unkrautbekämfung in Getreidesaaten (C. Smith, Sulfonylurea herbicides, 1991, PJB Publication Ltd., pg. 51, 67, 99, 107).

Alle Herbizide aus der Reihe der Sulfonylharnstoffe besitzen wesentliche Vorteile im Vergleich zu anderen Herbiziden, nämlich eine sehr niedrige Aufwandmenge (8-50 g/ha aktiver Substanz) und eine hohe Selektivität. Gleichzeitig verursacht die niedrige Zersetzungsgeschwindigkeit dieser Herbizide im Boden negative Nachwirkungen in der Saatfolge und Resistenzerscheinungen bei einer ganzen Reihe von Unkrautarten. Unbeabsichtigte Überdosen dieser Präparate können erhebliche phytotoxische Wirkungen auf Getreidesaaten ausüben.

Alle bekannten herbiziden Zusammensetzungen auf Sulfonylharnstoffbasis sind benetzbare Pulver oder Mikrogranulate. Das Fehlen von Präparaten in wasserlöslicher Form ist auf die geringe Löslichkeit der Sulfonylharnstoffe in Wasser und deren verhältnismäßig hohe Hydrolysegeschwindigkeit zurückzuführen.

Bekannt ist die Anwendung von 2-Methoxy-3,6-dichlorbenzoesäure und deren Salzen als Herbizide zur Unkrautbekämpfung in Getreidesaaten, wobei die Aufwandmenge der aktiven Substanz 150 g/ha ausmacht (Präparat Banwel-D oder Dikamba)(siehe N.N. Mel'nikov, K.V. Novozhilov, T.N. Pylova, "Khimicheskie sredstva zashchity rastenij", 1980, "Khimiya", Moskau, S. 27). Der Vorteil dieses Herbizids besteht darin, daß es keinerlei Resistenzerscheinungen beim Unkraut hervorruft. Seine Nachteile sind eine verhältnismäßig hohe Aufwandmenge und ein ziemlich begrenztes Wirkungsspektrum.

Um die herbizide Wirkung der 2-Methoxy-3,6-dichlorbenzoesäure zu erhöhen, deren Aufwandmenge herabzusetzen und die den auf Benzolsulfonylharnstoffbasis entwickelten Herbiziden anhaftenden Nachteile zu beheben, muß eine herbizide Zusammensetzung bereitgestellt werden, die bei niedriger Aufwandmenge über ein breites Wirkungsspektrum in bezug auf Unkrautunterdrückung verfügt, keine Nachwirkungen bei der Saatfolge hervorruft, keine phytotoxischen Einflüsse auf die bearbeiteten Saaten ausübt und keine Resistenzentwicklungen beim Unkraut zeigt.

Als nächstliegende technische Lösung ist eine herbizide Zusammensetzung zur Unkrautbekämpfung anzusehen, die aus einem Gemisch eines Benzolsulfonylharnstoffderivats der Formel 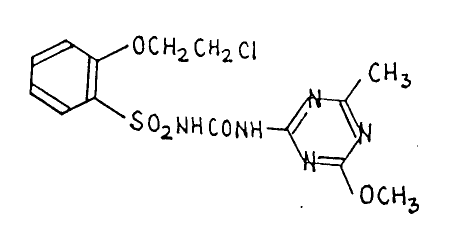 und 2-Methoxy-3,6-dichlorbenzoesäure und zusätzlich einer oberflächenaktiven Substanz, einem organischen Lösungsmittel und Wasser besteht (EP 0 236 273, AON47/36, 1987).

Bekannt ist ein Verfahren zur Unkrautbekämpfung in Getreidesaaten, bei dem ein herbizides Gemisch aus einem Benzolsulfonylharnstoffderivat und 2-Methoxy-3,6-dichlorbenzoesäure unter Zusatz einer oberflächenaktiven Substanz, eines organischen Lösungsmittels und Wasser in Form einer Emulsion oder Suspension in der Menge von bis zu 3 kg/ha auf das Unkraut versprüht wird. Konkrete Angaben über die obengenannte Mischung und das Verfahren sind nicht veröffentlicht.

Die vorliegende Erfindung betrifft eine herbizide Zusammensetzung zur Anwendung in Getreidesaaten bestehend aus einem Ammoniumsalz des Benzolsulfonylharnstoffs der allgemeinen Formel (I) 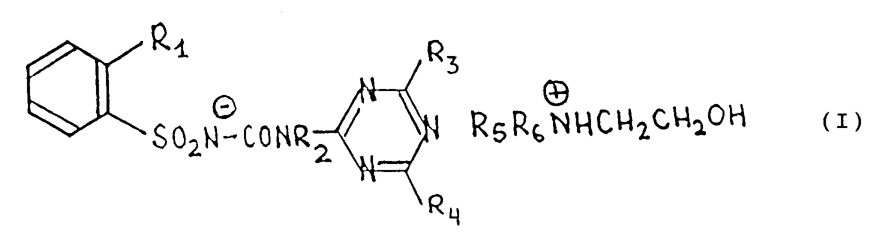
- worin: R₁ = Cl, CO₂CH₃ oder OCH₂CH₂Cl; R₂ = H oder CH₃;
R₃ = CH₃ oder N(CH₃)₂; R₄ = OCH₃ oder ON=C(CH₃)₂;
R₅ =CH₃ oder C₂H₅; R₆ = C₂H₅ oder CH₂CH₂OH;
und einem Ammoniumsalz der 2-Methoxy-3,6-dichlorbenzoesäure der allgemeinen Formel (II) 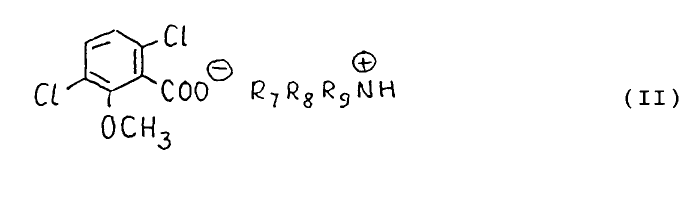
- worin: R₇ = CH₃ oder C₂H₅; R₈ = H oder CH₂CH₂OH;
R₉ = C₂H₅ oder CH₂CH₂OH; oder
R₉ = CH₃, sofern R₇ = CH₃ und R₈ = H;
und zusätzlich aus einer oberflächenaktiven Substanz, organischem Lösungsmittel und Wasser bei nachfolgender Zusammensetzung der Komponenten (in Masse-%):

| | |
|---|---|
| Ammoniumsalz des Benzolsulfonylharnstoffderivats | 2,0-50% |
| Ammoniumsalz der 2-Methoxy-3,6-dichlorbenzoesäure | 5,0-50% |
| oberflächenaktive Substanz | 1,0- 5,0% |
| organisches Lösungsmittel | 10,0-40,0% |
| Wasser | bis auf 100%. |

Als oberflächenaktive Substanzen verwendet man nachfolgende Verbindungen: bis-polyoxyethylierte Alkylamine, Natrium-bis(2-ethylhexyl)-succinatosulfonat, Monoalkylether von Polyethylenglykol auf Fettspiritusbasis, Alkylarylether von Polyethylen- oder Polypropylenglykol.

Als Lösungsmittel verwendet man Triethylenglykol.

Das Verfahren zur Unkrautbekämpfung in Getreidesaaten umfaßt die Bearbeitung der Saaten mit einer herbiziden Zusammensetzung auf der Basis von Derivaten des Benzolsulfonylharnstoffes der Formel (I) 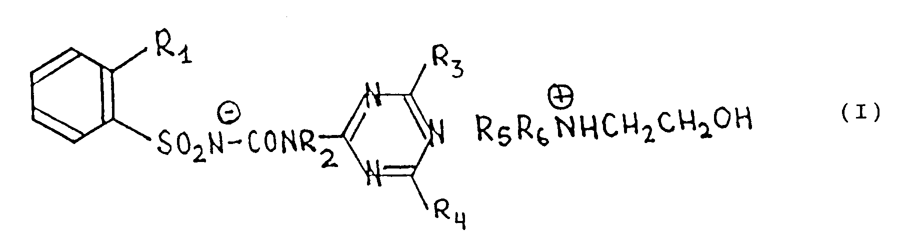
- worin: R₁ = Cl, CO₂CH₃ oder OCH₂CH₂Cl; R₂ = H oder CH₃;
R₃ = CH₃ oder N(CH₃)₂; R₄ = OCH₃ oder ON=C(CH₃)₂;
R₅ =CH₃ oder C₂H₅; R₆ = C₂H₅ oder CH₂CH₂OH;
und 2-Methoxy-3,6-dichlorbenzoesäure der Formel (II) 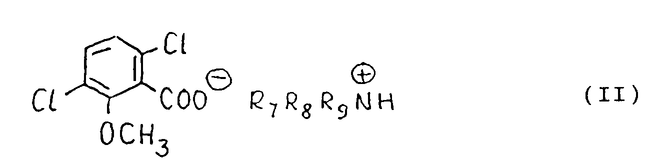
- worin: R₇ = CH₃ oder C₂H₅; R₈ = H oder CH₂CH₂OH;
R₉ = C₂H₅ oder CH₂CH₂OH; oder
R₉ = CH₃, sofern R₇ = CH₃ und R₈ = H;
und zusätzlich einer oberflächenaktiven Substanz, organischem Lösungsmittel und Wasser, wobei die Derivate des Benzolsulfonylharnstoffes und die 2-Methoxy-3,6-dichlorbenzoesäure als Ammoniumsalze in Form wässeriger Lösungen bei nachfolgender Zusammensetzung der Komponenten (in Masse-%) verwendet werden:

| | |
|---|---|
| Ammoniumsalz des Benzolsulfonylharnstoffderivats | 2,0-50% |
| Ammoniumsalz der 2-Methoxy-3,6-dichlorbenzoesäure | 5,0-50% |
| oberflächenaktive Substanz | 1,0- 5,0% |
| organisches Lösungsmittel | 10,0-40,0% |
| Wasser | bis auf 100%. |

Die Aufwandmenge der aktiven Bestandteile beträgt 25-125 g/ha.

Die Erfindung wird anhand folgender Beispiele veranschaulicht.

### Beispiel 1: Herstellung des Diethylethanolammoniumsalzes des 1-(2-Chlorbenzolsulfonyl)-3-(4-methyl-6-methoxy-1,3,5-triazin-2-yl)-harnstoffes

In einen Reaktor füllt man 357 g (1 Mol) 1-(2-Chlorbenzolsulfonyl)-3-(4-methyl-6-methoxy-1,3,5-triazin-2-yl)-harnstoff, 117 g (1 Mol) Diethylaminoethanol und 10 l Wasser und vermischt den Inhalt bei Zimmertemperatur bis zur völligen Auflösung des Bodensatzes. Anschließend dampft man die Lösung im Vakuum eines Rotationsverdampfers ein, wobei das gewünschte Produkt in guter Ausbeute erhalten wird.

In gleicher Weise erhält man die Ammoniumsalze des Benzolsulfonylharnstoffderivats. Die Ergebnisse der Elementaranalyse und physikalische sowie chemische Eigenschaften sind in Tabelle 2 angeführt.

### Beispiel 2: Herstellung des Diethylethanolammoniumsalzes der 2-Methoxy-3,6-dichlorbenzoesäure

In einen Reaktor füllt man 221 g (1 Mol) 2-Methoxy-3,6-dichlorbenzoesäure, 117 g (1 Mol) Diethylaminoethanol und 2 l Wasser und mischt den Inhalt bei 50°C bis zur völligen Auflösung des Bodensatzes. Anschließend dampft man die Lösung im Vakuum eines Rotationsverdampfers ein, wobei das gewünschte Produkt in guter Ausbeute erhalten wird. Die Ergebnisse der Elementaranalyse sind in Tabelle 3 ange

führt.

### Beispiel 3: Herstellung einer herbiziden Zusammensetzung

In einen Reaktor füllt man eine berechnete Menge eines Ammoniumsalzes des Benzolsulfonylharnstoffes (I) und eine entsprechend dem benötigten Masseverhältnis (von 10:1 bis 1:25) berechnete Menge eines Ammoniumsalzes der 2-Methoxy-3,6-dichlorbenzoesäure (II). Dann fügt man die erforderlichen Mengen an oberflächenaktiver Substanz, Triethylenglykol und Wasser hinzu und mischt den Inhalt bei Zimmertemperatur bis zur völligen Auflösung des Bodensatzes.

In Tabelle 1 sind Beispiele für Zusammensetzungen angeführt, deren Komponenteninhalt sich innerhalb der empfohlenen Grenzen befindet.

### Beispiel 4: Labortests der herbiziden Zusammensetzungen (Beispiel 1.1, 1.2, 1.3)

Herbizide Zusammensetzungen mit unterschiedlichen Inhaltsverhältnissen von Ammoniumsalzen der Benzolsulfonylharnstoffe der Formel (I) und 2-Methoxy-3,6-dichlorbenzoesäure der Formel (II) wurden in Gewächshäusern an nachfolgenden Saatkulturen - Weizen, Mais - und Unkräutern - Weißer Gänsefuß, Ackerwindhalm, Fuchsschwanz, Lolch, Sauerampfer, Klatschmohn - getestet. Die Getreidesaaten wurden im Vegetationsstadium beim Erscheinen des dritten Blattes und in anderen Tests beim Erscheinen des zweiten echten Blattes mit der herbiziden Zusammensetzung behandelt, wobei die Aufwandmenge 100 g/ha betrug. Die Bodenfeuchtigkeit wurde in den Testsaaten bei täglicher Bewässerung in Höhe von 60-70% maximaler Feuchtigkeitskapazität gehalten. Nach 14 Tagen vom Zeitpunkt der Applikation an gerechnet wurde die Wirkung der herbiziden Zusammensetzungen ausgewertet.

Den Ergebnissen zufolge ruft die Kombination der Herbizide (I) und (II) einen erheblichen synergistischen Effekt hervor. Die Testresultate sind in den Tabellen 4-7 angegeben.

### Beispiel 5: Feldversuche der herbiziden Zusammensetzungen an Weizen

Die Sommersaaten des Weizens (Moskauer 35) waren vorwiegend mit Weißem Gänsefuß, Hohlzahn, Kamille, Klebkraut, Gänsedistel und Vogelmiere verunkrautet. Die herbiziden Zusammensetzungen wurden in Form wässriger Lösungen (500 l/ha) im Stadium der Staudenbildung der Saaten angewendet. Die Feldversuche der erfindungsgemäßen herbiziden Zusammensetzungen bestätigen das Vorhandensein eines synergistischen Effektes.

Wie aus den Tabellen 8-9 ersichtlich ist, können Getreidekulturen, z.B. Weizen, mit Hilfe der getesteten herbiziden Zusammensetzungen effektiv vor Unkraut geschützt werden, wobei die Aufwandmenge niedrig ist. Somit sind die erfindungsgemäßen herbiziden Zusammensetzungen für die Saatfolge ungefährlich. Im Vergleich zu einzeln applizierten Wirkstoffen bewirkt die Anwendung dieser herbiziden Zusammensetzungen bei gleichzeitiger Erhöhung der herbiziden Wirkung eine Verminderung der Aufwandmengen von Benzolsulfonylharnstoffsalzen (I) um das zwei- bis fünffache und von Salzen der 2-Methoxy-3,6-dichlorbenzoesäure (II) um das dreifache.

### Beispiel 6: Feldversuche der herbiziden Zusammensetzungen an Mais

Die Veruche wurden an Maissaaten (ROSS 144) vorgenommen, wobei die Herbizide in Form von wässrigen Lösungen während des 3-5 Blatt-Wachstumstadiums von Mais angewendet wurden. Die Hauptarten der Verunkrautung waren Hirsenartige 48-77% und Dikotylen 33-52%. Der Anteil der Borstenhirse im Bestand der Hirsenartigen erreichte 52-59%. Die Dikotylen setzten sich zu 85-96% aus Fuchsschwanz zusammen.

Aus Tabelle 7 ist ersichtlich, daß die erfindungsgemäßen herbiziden Zusammensetzungen wirksam dikotyledone Unkräuter unterdrücken und eine erhebliche phytotoxische Wirkung auf monokotyledones Unkraut ausüben. Bei gleichzeitiger Erhöhung der Wirkungseffektivität gestattet die Anwendung der erfindungsgemäßen herbiziden Zusammensetzung auf der Basis der Benzolsulfonylharnstoffderivate (IB) und 2-Methoxy-3,6-dichlorbenzoesäure (II) die Aufwandmengen für (IB) um das eineinhalbfache zu vermindern und für (II) um das zwei- bis achtfache herabzusetzen.

Somit ist die besonders hohe Effektivität der erfindungsgemäßen herbiziden Zusammensetzungen bei der Unkrautbekämpfung in ährigen Getreide- und auch Maissaaten nachgewiesen.

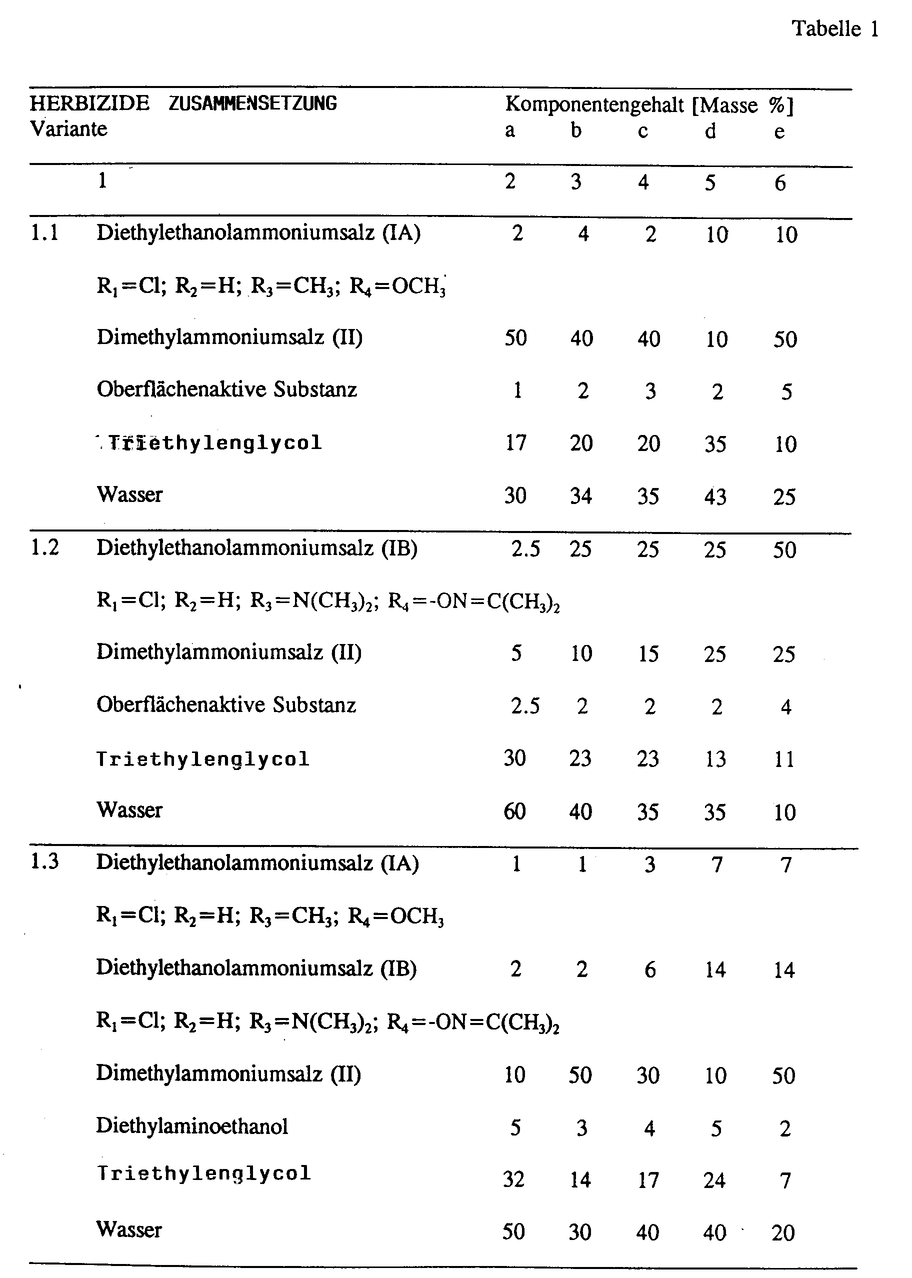

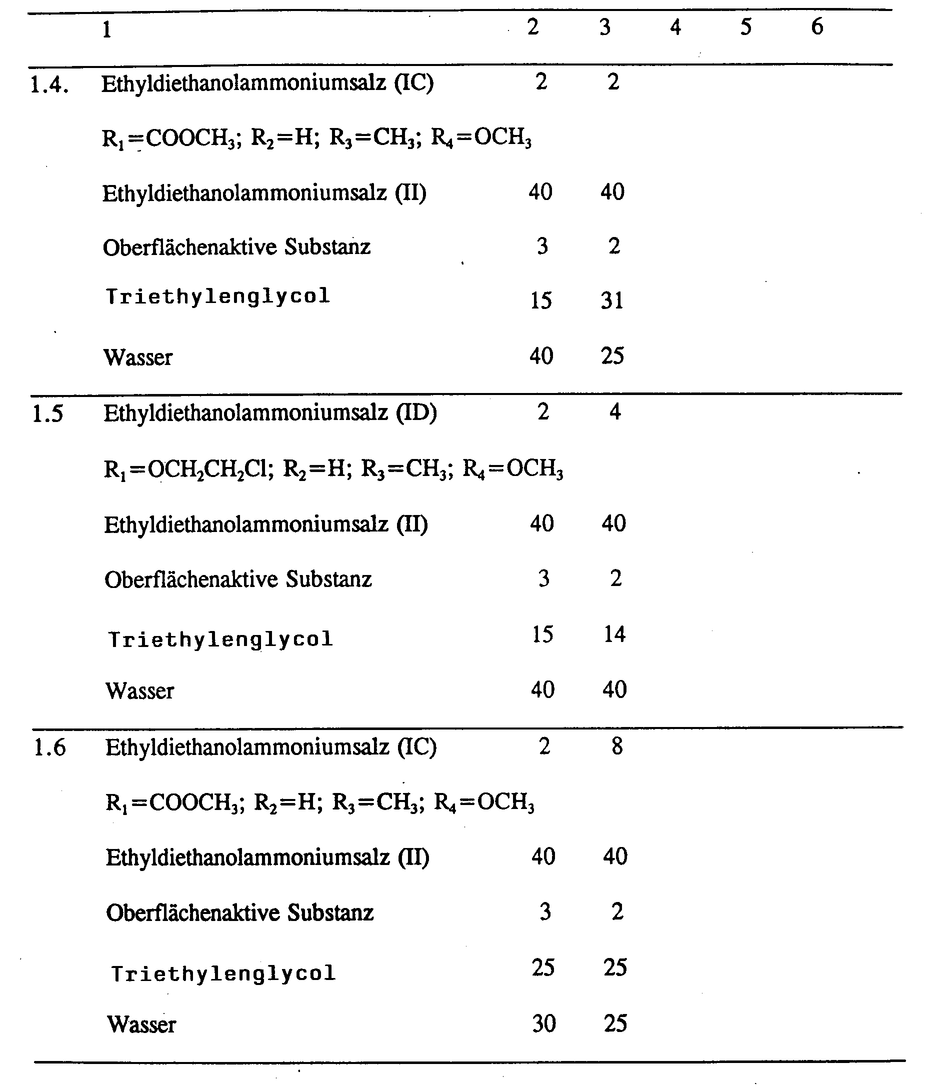

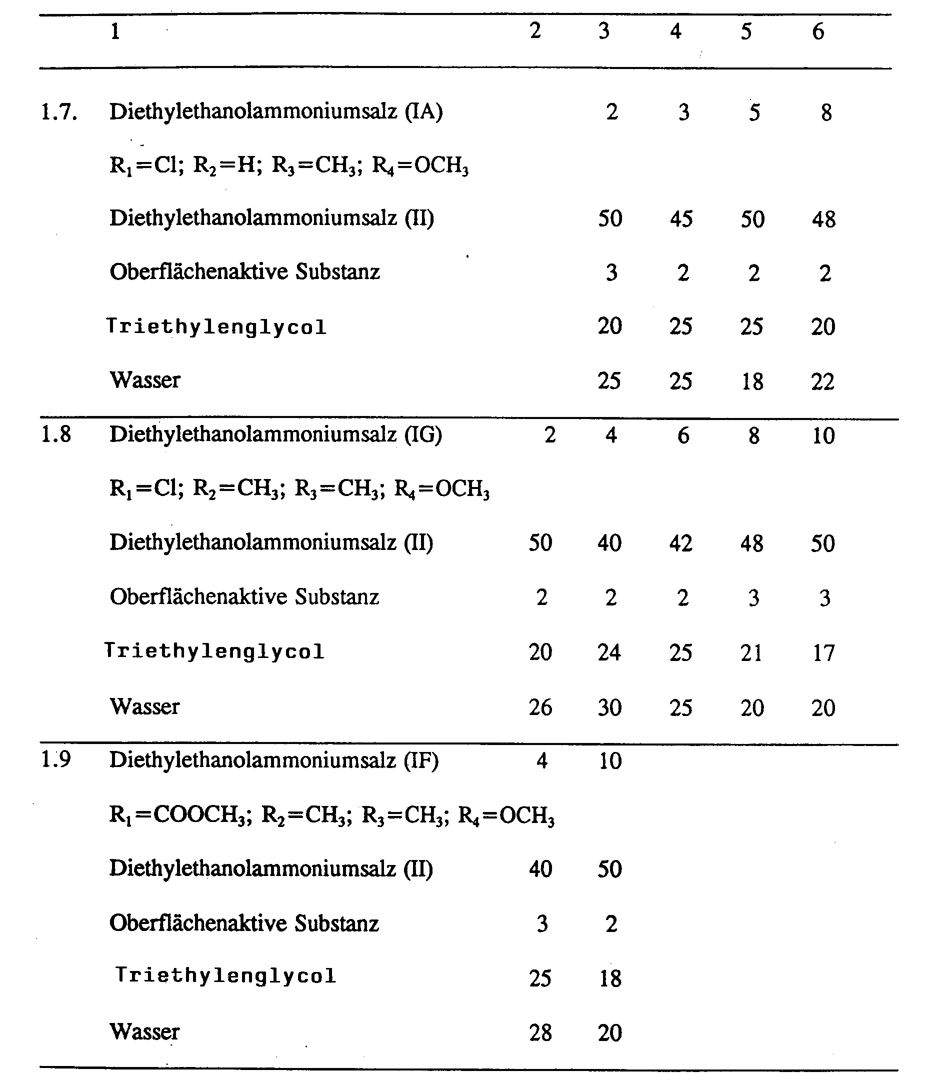

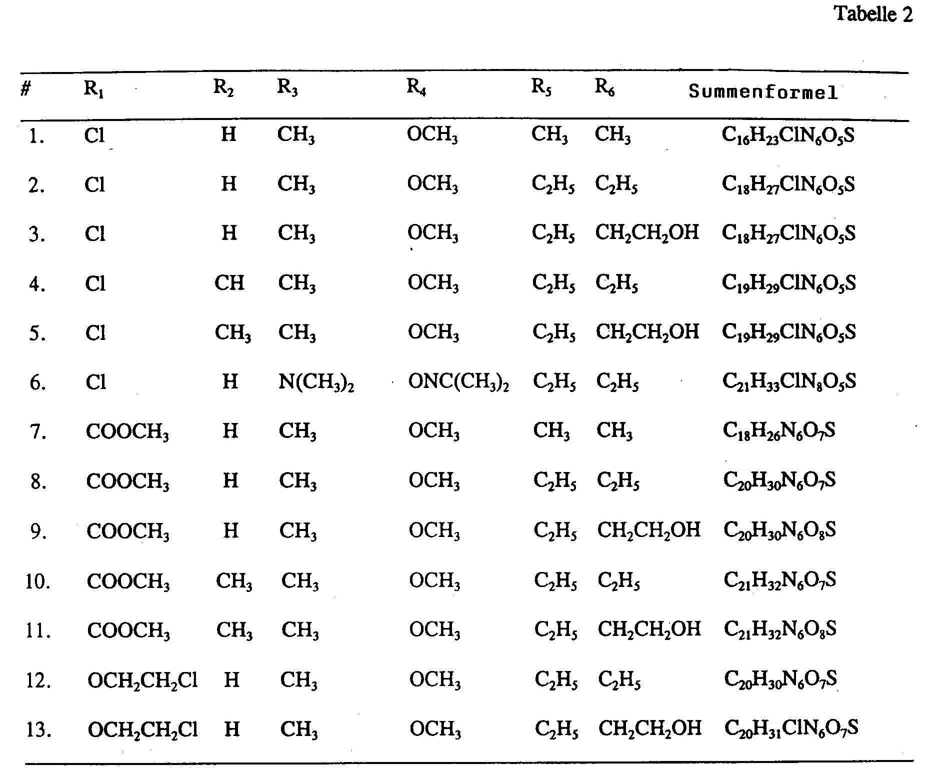

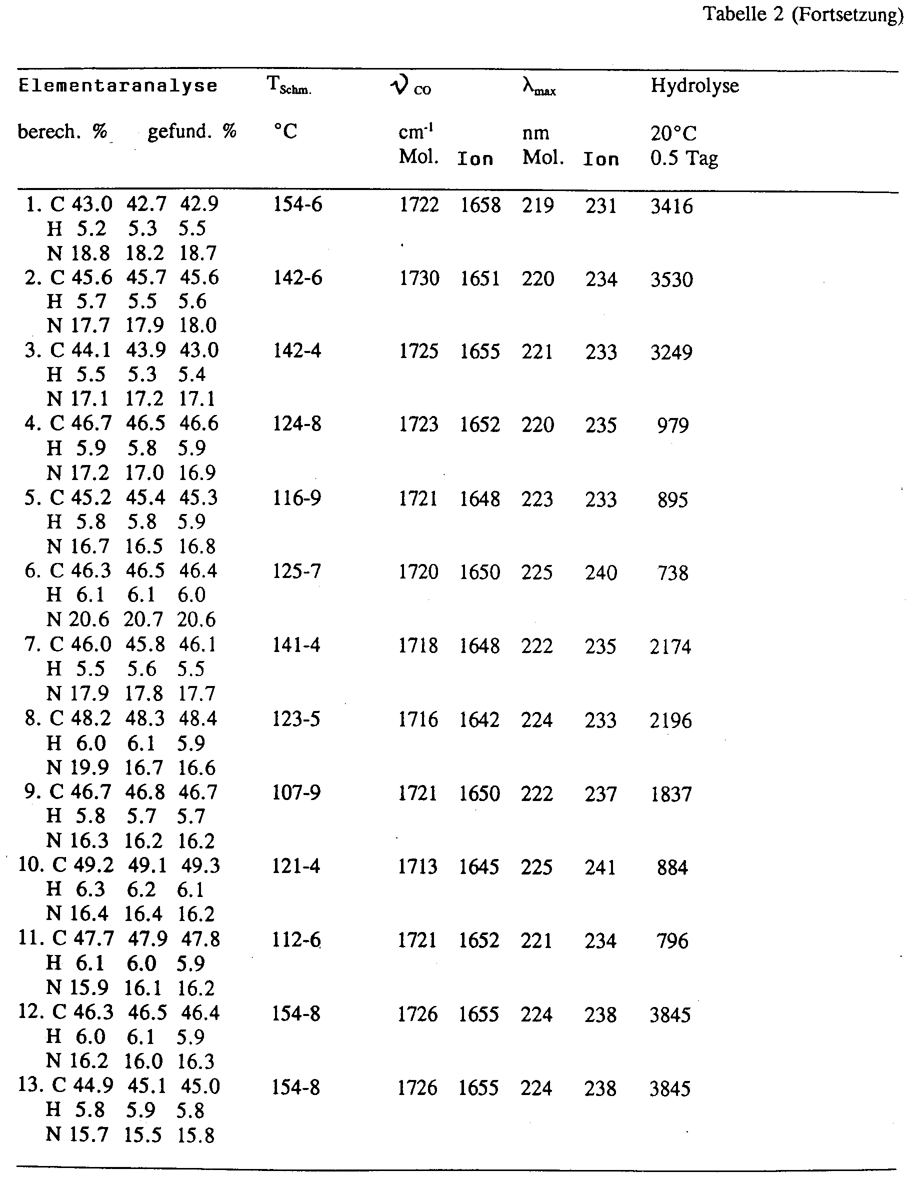

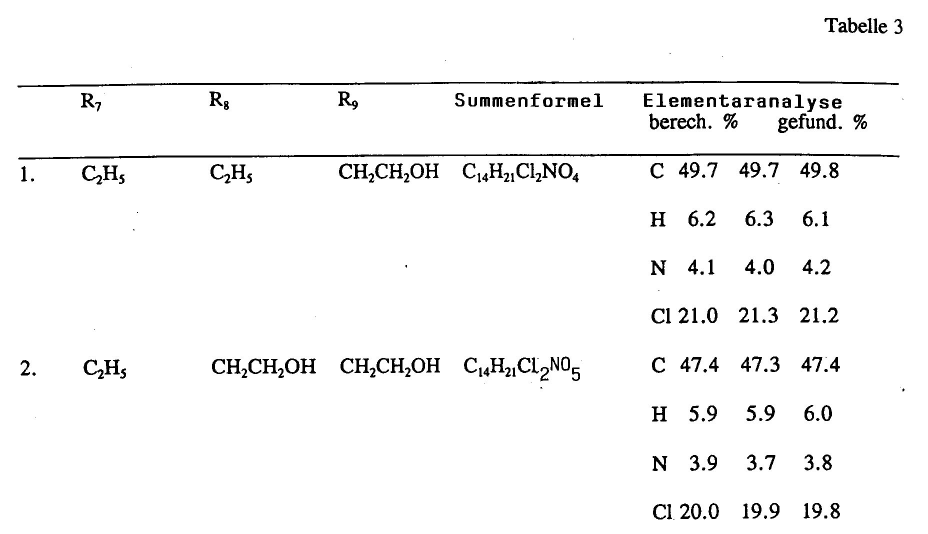

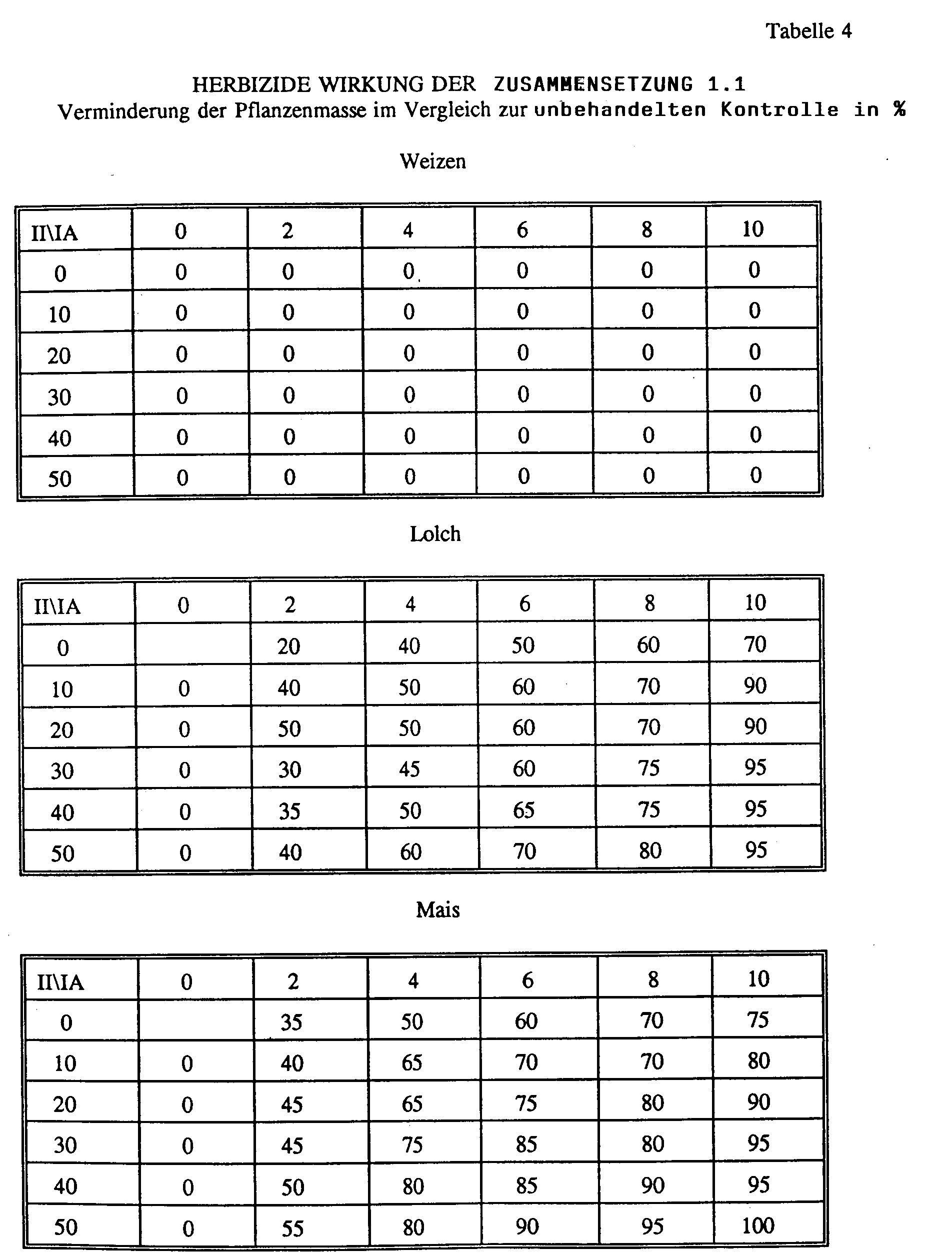

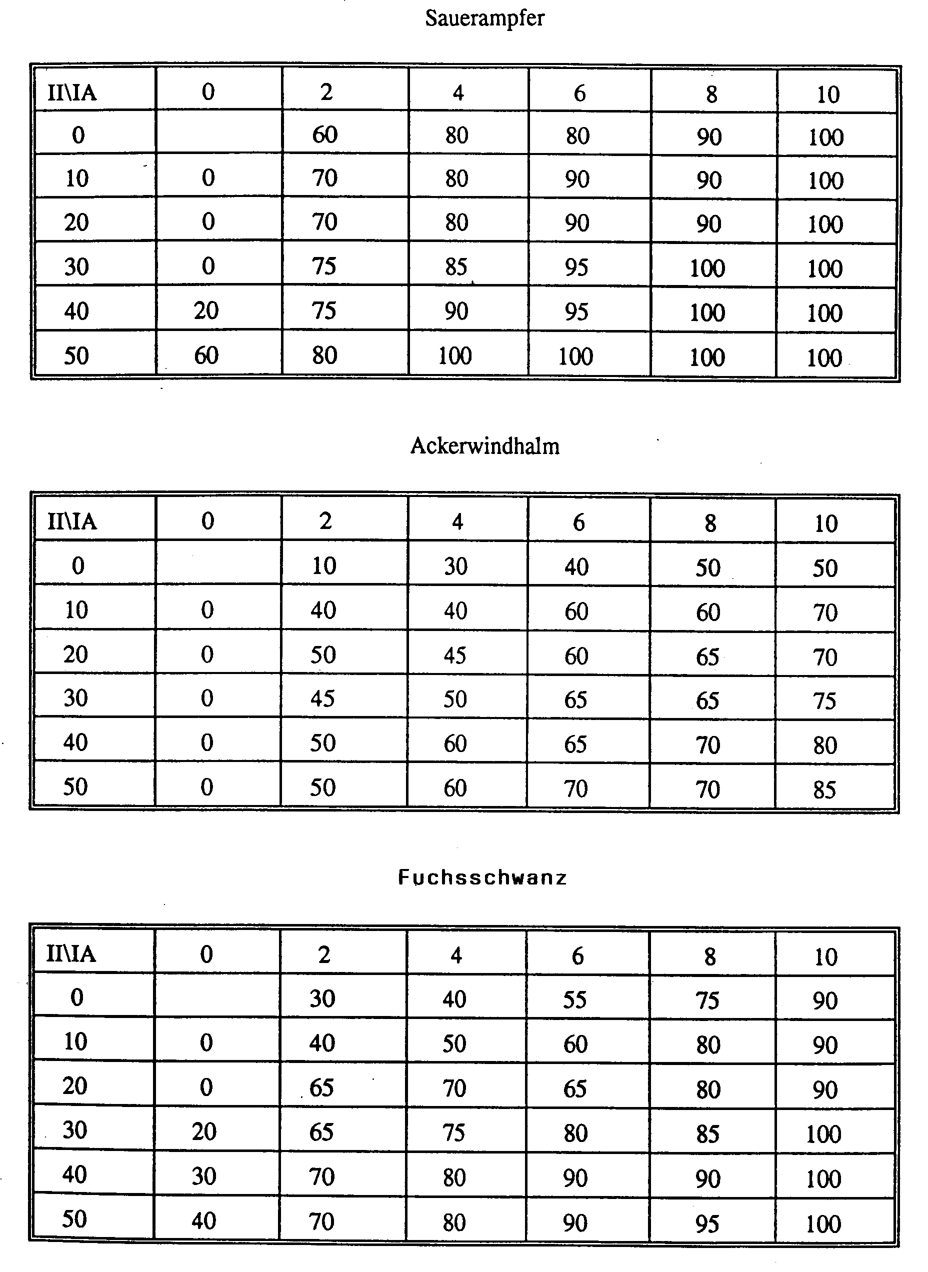

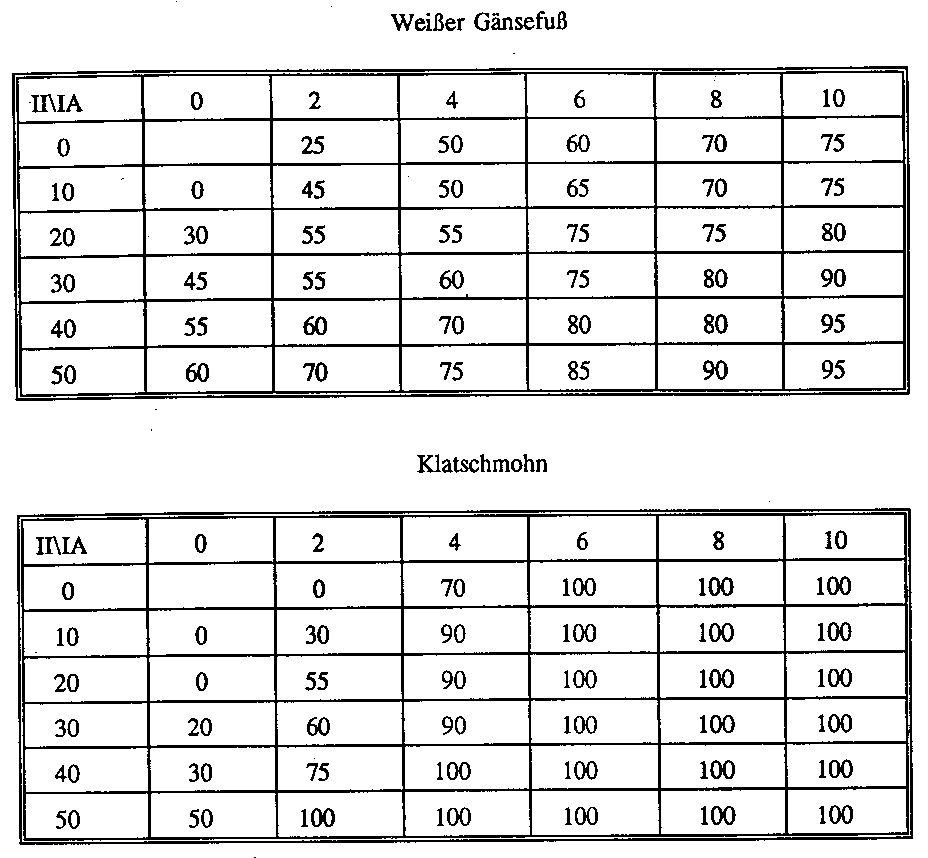

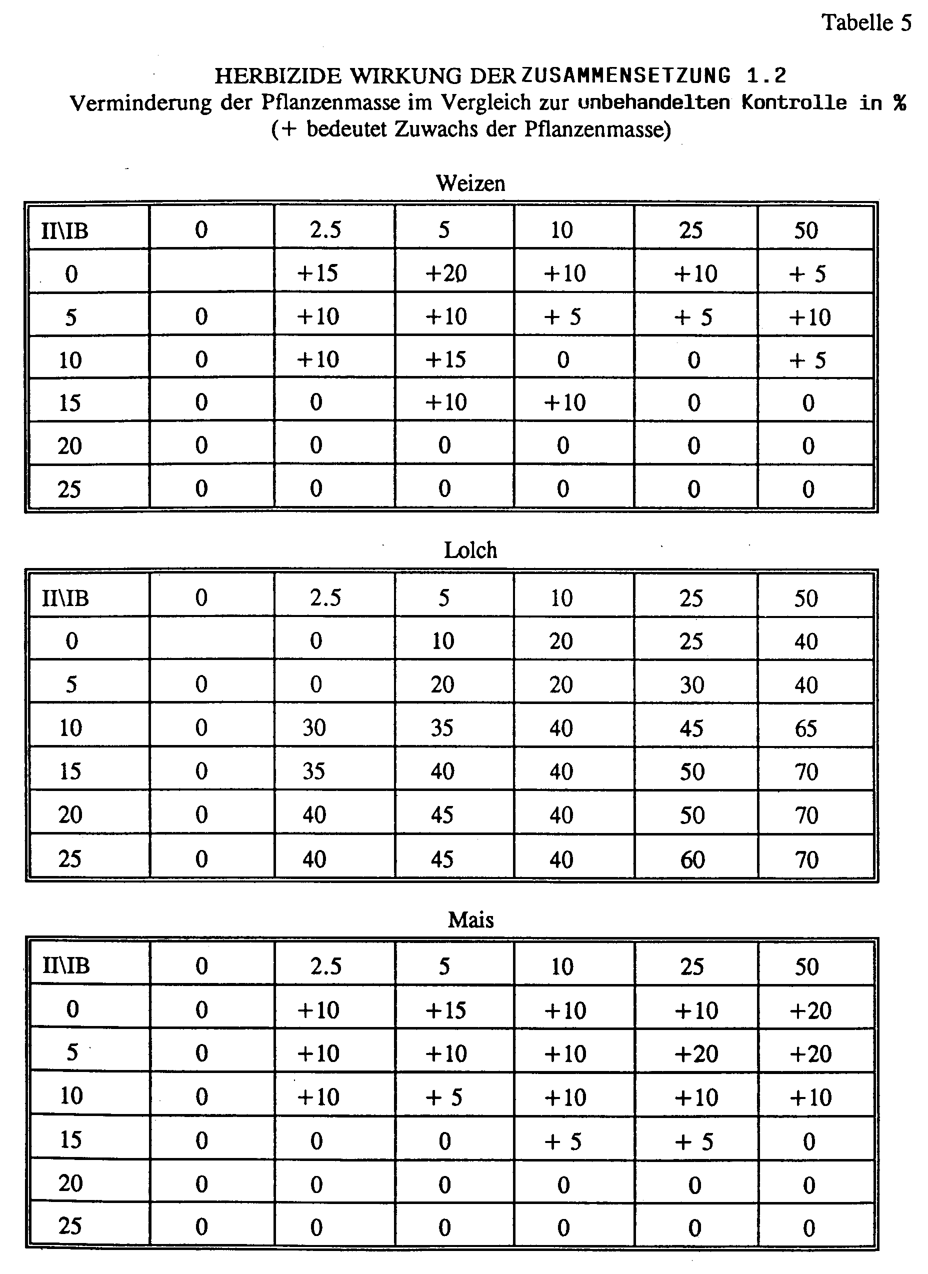

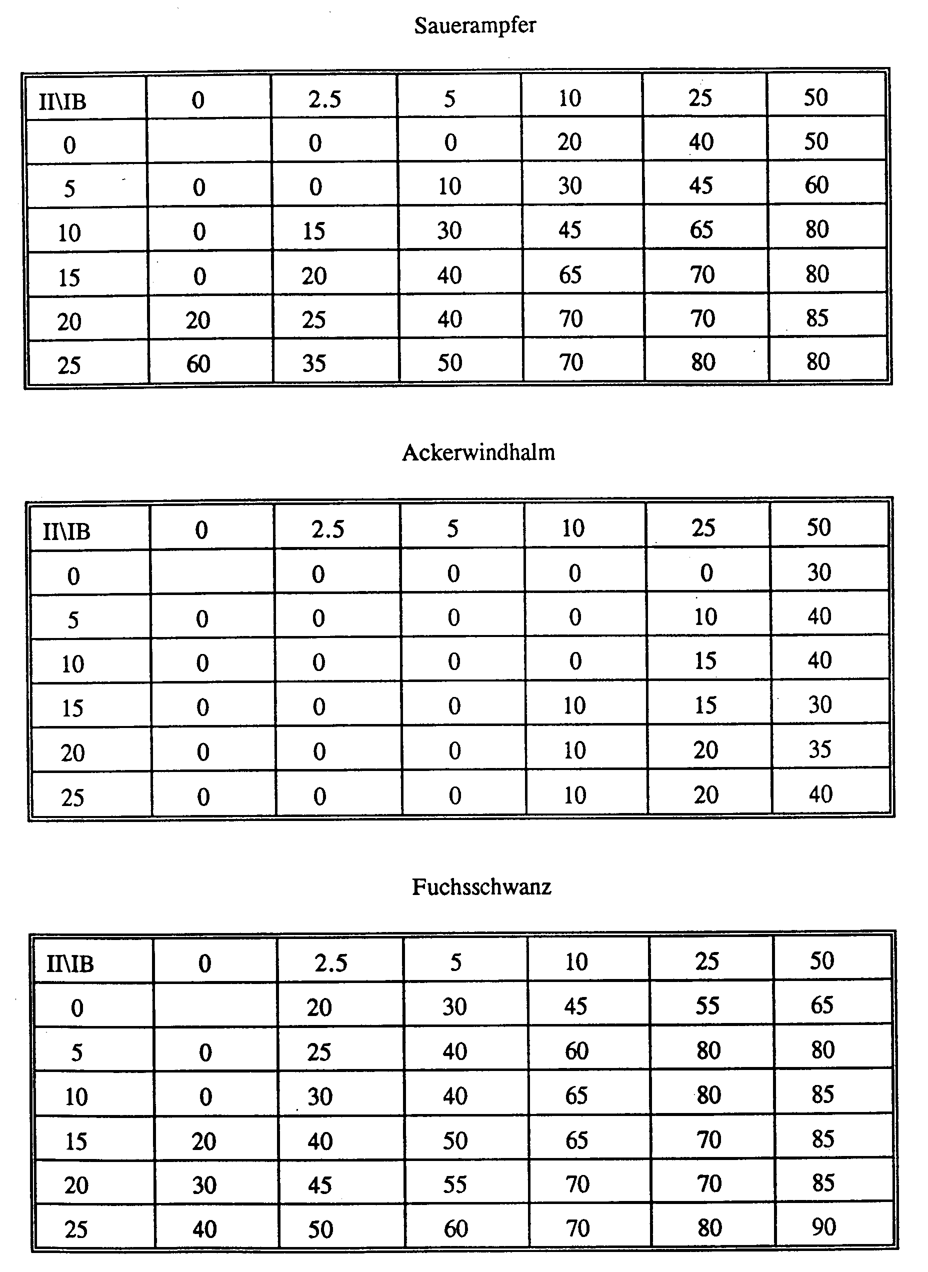

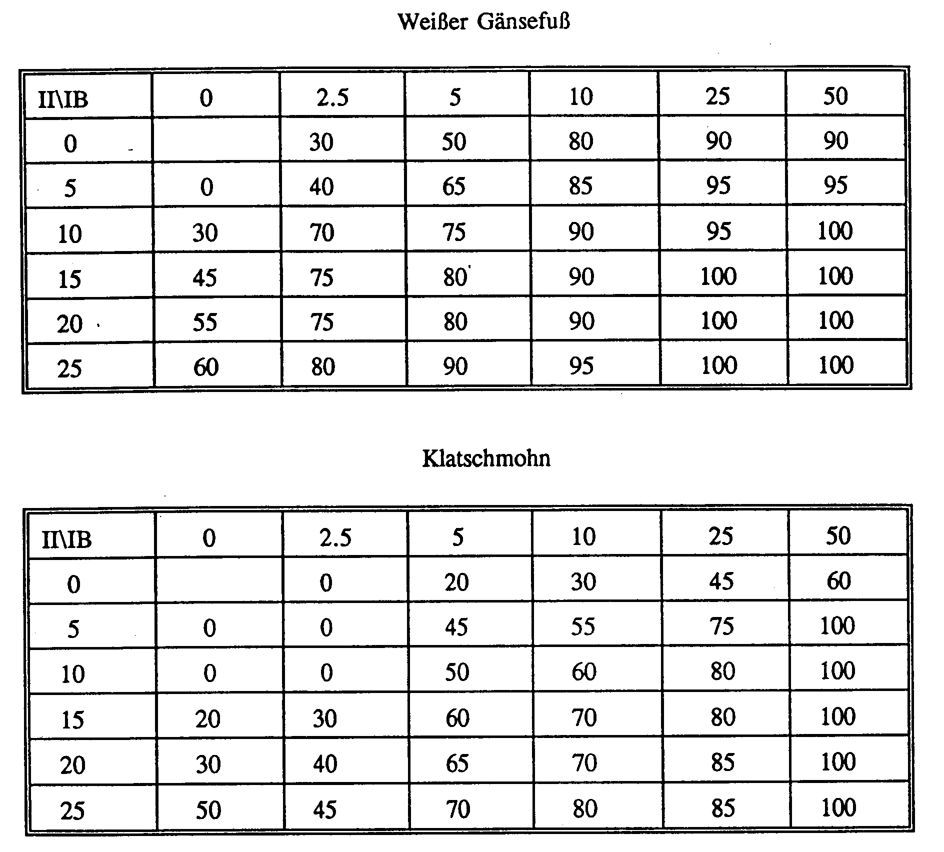

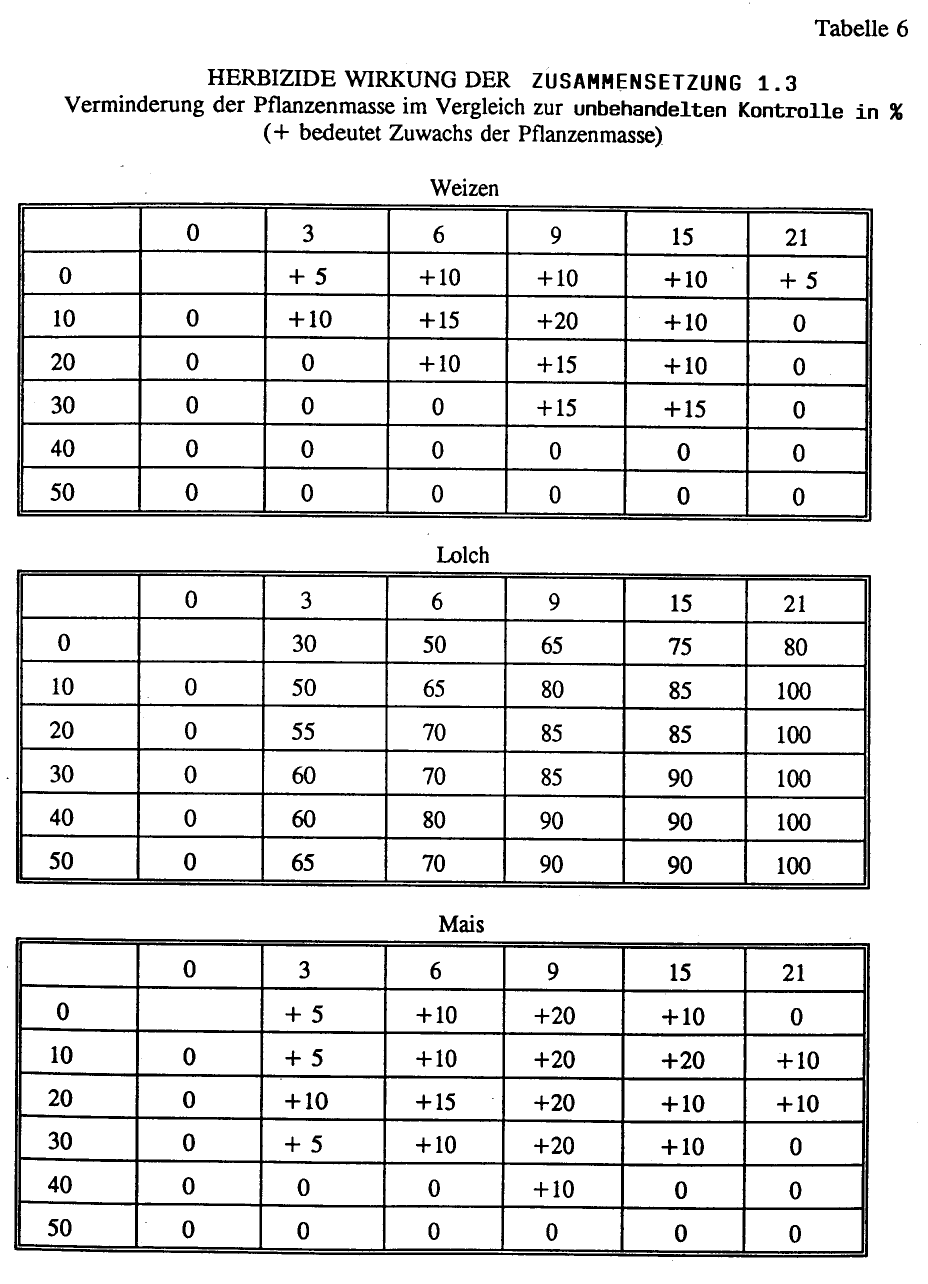

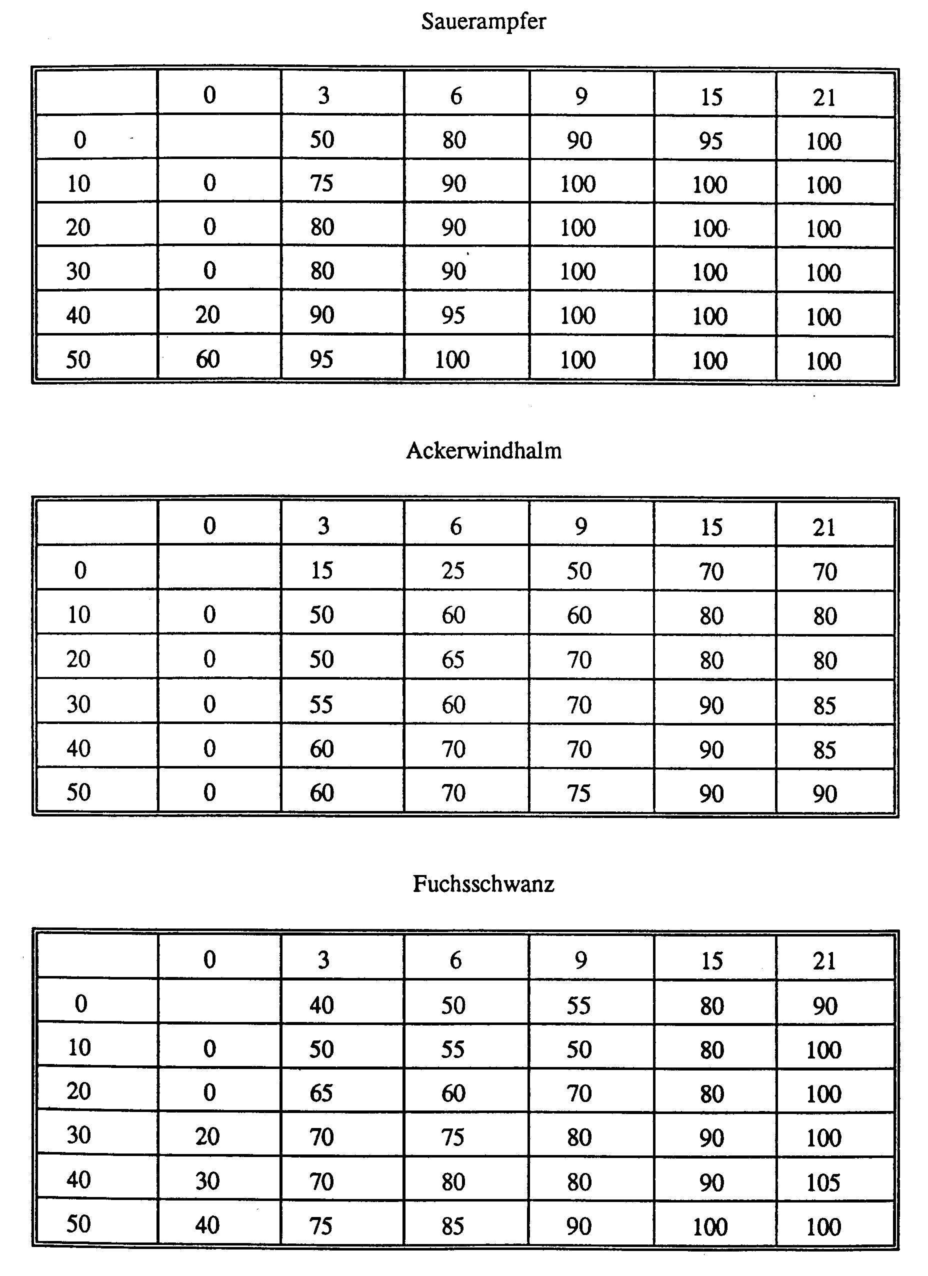

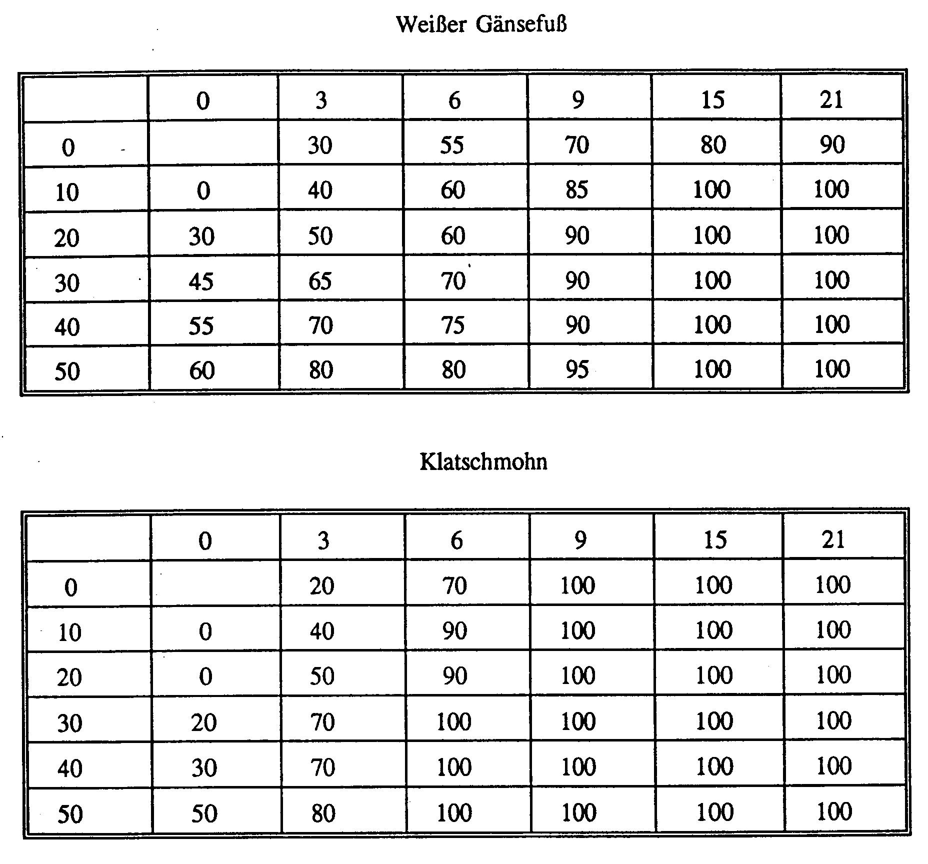

**Tabelle 7**

| HERBIZIDE WIRKUNG UND SYNERGIE DER ZUSAMMENSETZUNG 1.1 UND EINER MISCHUNG VON SULFONYLHARNSTOFFEN (SH) MIT DICAMBA | | | | |
|---|---|---|---|---|
| Zusammensetzung | Wirkstoffdosis g/ha | Verringerung der Pflanzenmasse (%) | | |
| | | Ackerwindhalm E | Sauerampfer E | Klatschmohn E |
| IA | 2.0 | 10 | 60 | 0 |
| II | 32.0 | 0 | 0 | 0 |
| I.Icc | 32.0 | 45/+35 | 75/+15 | 60/+40 |
| | | *) 45/+35 | 70/+10 | 60/+40 |
| | | **) 43/+33 | 70/+10 | 58/+38 |

| SH(R₁ =Cl) + Dicamba (1:15) | | | | |
|---|---|---|---|---|
| | 32.0 | 40/+30 | 60/0 | 50/+30 |
| | | *) 25/+15 | 40/-20 | 25/+5 |
| | | **) 18/+ 8 | 32/-28 | 20/0 |
| ID | 4.0 | 15 | 50 | 10 |
| II | 30.0 | 0 | 0 | 20 |
| I.5a | 32.0 | 50/+35 | 60/+10 | 65/+37 |
| | | *) 55/+40 | 55/+5 | 65/+37 |
| | | **) 48/+33 | 55/+5 | 60/+32 |

| SH(R₁=OCH₂CH₂Cl) + Dicamba (1:15) | | | | |
|---|---|---|---|---|
| | 32 | 40/+25 | 50/0 | 45/+17 |
| | | *) 20/+5 | 15/-35 | 30/-8 |

| | | | | |
|---|---|---|---|---|
| *) Die Pflanzen wurden 30 Tage nach Herstellung der lösung bearbeitet | | | | |
| **) Die Pflanzen wurden 60 Tage nach Herstellung der Lösung bearbeitet | | | | |

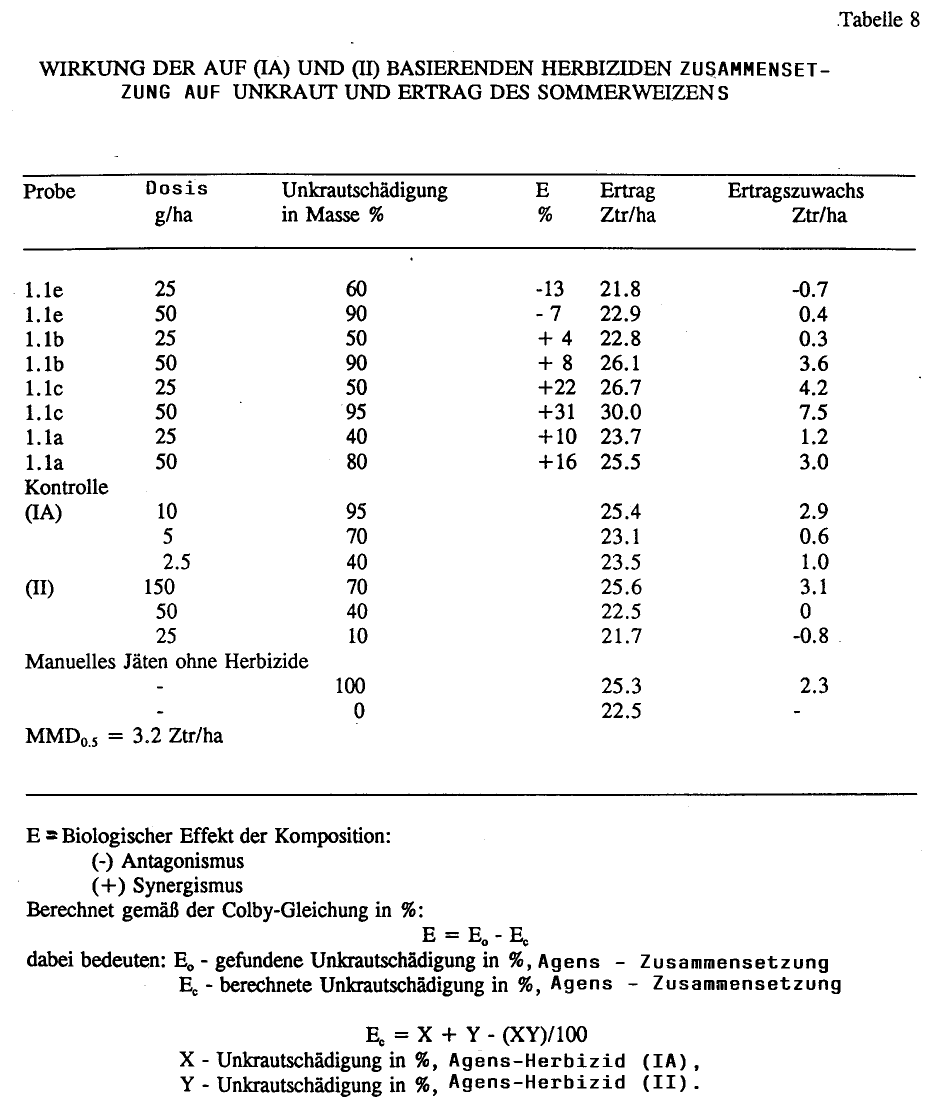

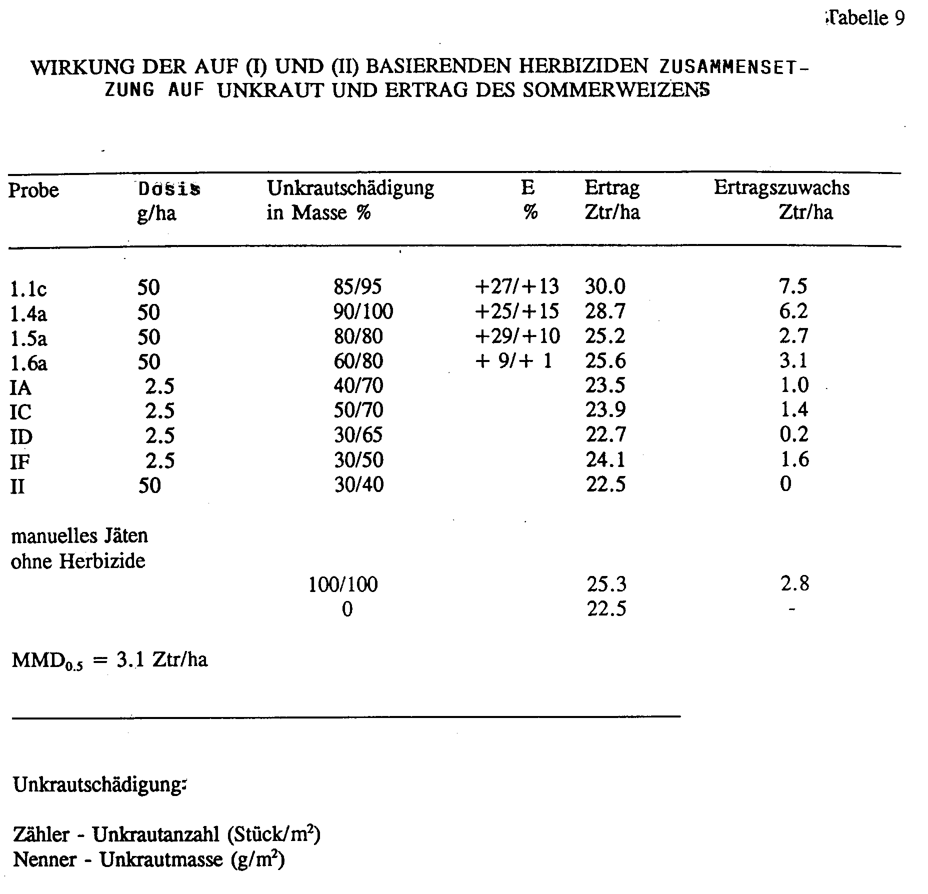

**Tabelle 10**

| WIRKUNG DER AUF (I) UND (II) BASIERENDEN HERBIZIDEN ZUSAMMENSETZUNG AUF UNKRAUT UND MAIS | | | | | |
|---|---|---|---|---|---|
| Probe | Dosis g/ha | Unkrautschädigung | in Masse-Prozenten | Ertrag Ztr/ha | Ertragszuwachs Ztr/ha |
| | | Hirseartige | Fuchsschwanz | | |
| 1.2b | 60 | 30 | 60 | 217 | 20 |
| 1.2b | 80 | 40 | 70 | 234 | 37 |
| 1.2b | 120 | 40 | 75 | 223 | 26 |
| 1.2c | 60 | 45 | 90 | 198 | 1 |
| 1.2c | 80 | 65 | 95 | 245 | 48 |
| 1.2c | 120 | 70 | 95 | 238 | 41 |
| 1.2d | 60 | 50 | 70 | 226 | 39 |
| 1.2d | 80 | 60 | 90 | 234 | 37 |
| 1.2d | 120 | 75 | 90 | 218 | 21 |

| Kontrolle | | | | | |
|---|---|---|---|---|---|
| IB | 50 | 15 | 60 | 231 | 34 |
| II | 150 | 30 | 70 | 221 | 24 |
| ohne Herbizide | - | 0 | 0 | 197 | - |
| MMD_{0.5} = 30 Ztr/ha | | | | | |

### FORMELN FÜR DIE TABELLEN 8, 9, 10

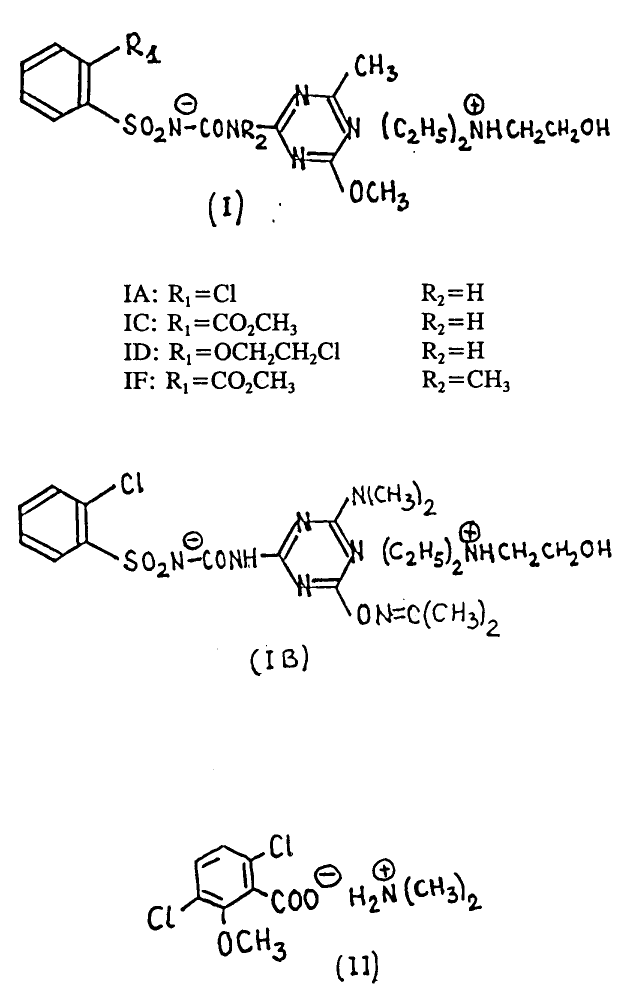

## Patentansprüche

1. Herbizide Zusammensetzung zur Anwendung in Getreidesaaten bestehend aus Derivaten des Benzolsulfonylharnstoffes und der Dichlorbenzoesäure, oberflächenaktiver Substanz, organischem Lösungsmittel und Wasser, **dadurch gekennzeichnet,** daß sie als Benzolsulfonylharnstoffderivat ein Ammoniumsalz der allgemeinen Formel (I) 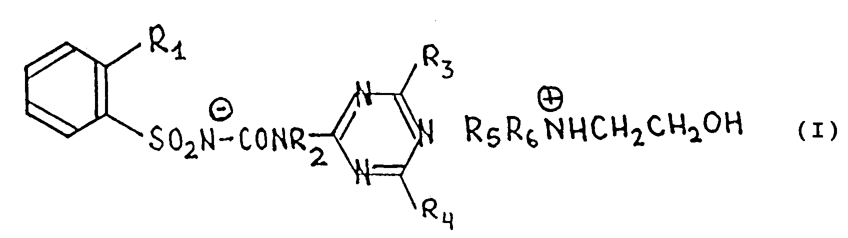
worin R₁ = Cl, CO₂CH₃ oder OCH₂CH₂Cl; R₂ = H oder CH₃;
R₃ = CH₃ oder N(CH₃)₂; R₄ = OCH₃ oder ON=C(CH₃)₂;
R₅ =CH₃ oder C₂H₅; R₆ = C₂H₅ oder CH₂CH₂OH;
und als Dichlorbenzoesäurederivat ein Ammoniumsalz der 2-Methoxy-3,6-dichlorbenzoesäure der allgemeinen Formel (II) 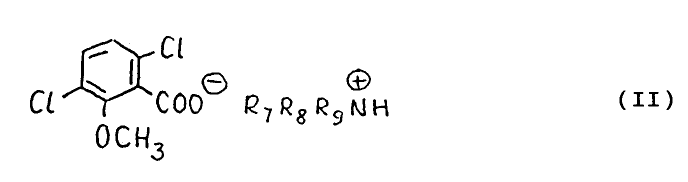
worin R₇ = CH₃ oder C₂H₅; R₈ = H oder CH₂CH₂OH;
R₉ = C₂H₅ oder CH₂CH₂OH; oder
R₉ = CH₃, sofern R₇ = CH₃ und R₈ = H;
enthält bei nachfolgender Zusammensetzung der Komponenten (in Masse-%):
| | |
|---|---|
| Ammoniumsalz des Benzolsulfonylharnstoffderivats | 2,0-50% |
| Ammoniumsalz der 2-Methoxy-3,6-dichlorbenzoesäure | 5,0-50% |
| oberflächenaktive Substanz | 1,0- 5,0% |
| organisches Lösungsmittel | 10,0-40,0% |
| Wasser | bis auf 100%. |

2. Herbizide Zusammensetzung gemäß Anspruch 1, **dadurch gekennzeichnet,** daß sie 2-Methoxy-3,6-dichlorbenzoesäure als Dimethylammoniumsalz, Diethylethanolammoniumsalz oder Ethylendiethanolammoniumsalz enthält.

3. Herbizide Zusammensetzung gemäß Anspruch 1, **dadurch gekennzeichnet,** daß sie als oberflächenaktive Substanz bis-polyoxyethylierte Alkylamine, Natrium-bis-(2-ethylhexyl)-succinatosulfonat, Monoalkylether von Polyethylenglykol auf Fettspiritusbasis, Alkylarylether von Polyethylen- oder Polypropylenglykol enthält.

4. Herbizide Zusammensetzung gemäß Anspruch 1, **dadurch gekennzeichnet,** daß sie als Lösungsmittel Triethylenglykol enthält.

5. Verfahren zur Unkrautbekämpfung in Getreidesaaten, bei dem die Saaten mit einer herbiziden Zusammensetzung auf der Basis von Derivaten des Benzolsulfonylharnstoffes und der Benzoesäure, einer oberflächenaktiven Substanz, einem organischen Lösungsmittel und Wasser bearbeitet werden, **dadurch gekennzeichnet,** daß eine herbizide Zusammensetzung verwendet wird, die als Benzolsulfonylharnstoffderivat ein Ammoniumsalz der allgemeinen Formel (I) 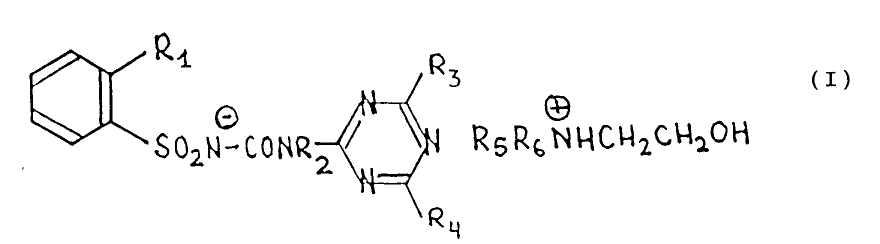
worin R₁ = Cl, CO₂CH₃ oder OCH₂CH₂Cl; R₂ = H oder CH₃;
R₃ = CH₃ oder N(CH₃)₂; R₄ = OCH₃ oder ON=C(CH₃)₂;
R₅ =CH₃ oder C₂H₅; R₆ = C₂H₅ oder CH₂CH₂OH;
und als Benzoesäurederivat ein Ammoniumsalz der 2-Methoxy-3,6-dichlorbenzoesäure der allgemeinen Formel (II) 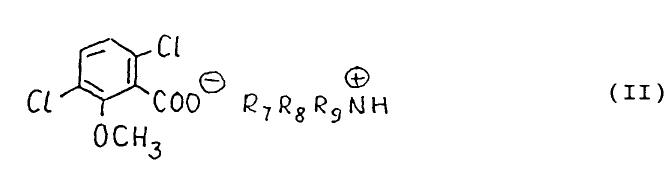
worin R₇ = CH₃ oder C₂H₅; R₈ = H oder CH₂CH₂OH;
R₉ = C₂H₅ oder CH₂CH₂OH; oder
R₉ = CH₃, sofern R₇ = CH₃ und R₈ = H;
enthält bei nachfolgender Zusammensetzung der Komponenten (in Masse-%):
| | |
|---|---|
| Ammoniumsalz des Benzolsulfonylharnstoffderivats | 2,0-50% |
| Ammoniumsalz der 2-Methoxy-3,6-dichlorbenzoesäure | 5,0-50% |
| oberflächenaktive Substanz | 1,0- 5,0% |
| organisches Lösungsmittel | 10,0-40,0% |
| Wasser | bis auf 100%, |
wobei die Aufwandmenge der aktiven Substanz 25 bis 125 g/ha beträgt.

## Claims

1. Herbicidal composition for use in cereal seed, comprising derivatives of benzenesulphonylurea and of dichlorobenzoic acid, a surface-active substance, an organic solvent and water, characterized in that it comprises, as the benzenesulphonylurea derivative, an ammonium salt of the general formula (I) 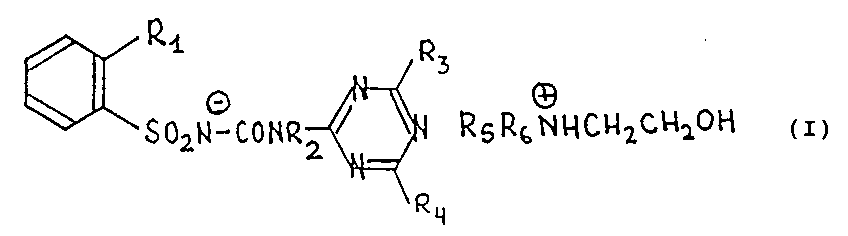
wherein R₁ = Cl, CO₂CH₃ or OCH₂CH₂Cl; R₂ = H or CH₃;
R₃ = CH₃ or N(CH₃)₂; R₄ = OCH₃ or ON=C(CH₃)₂;
R₅ = CH₃ or C₂H₅; R₆ = C₂H₅ or CH₂CH₂OH;
and, as the dichlorobenzoic acid derivative, an ammonium salt of 2-methoxy-3,6-dichlorobenzoic acid of the general formula (II) 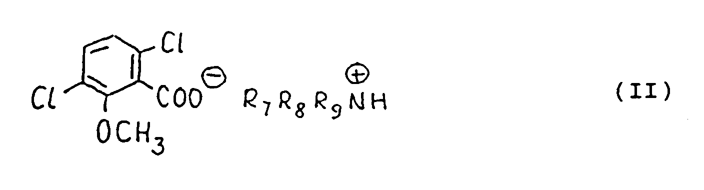
wherein R₇ = CH₃ or C₂H₅; R₈ = H or CH₂CH₂OH;
R₉ = C₂H₅ or CH₂CH₂OH; or
R₉ = CH₃, if R₇=CH₃ and R₈ = H;
with the following composition of the components (in % by weight):
| | |
|---|---|
| ammonium salt of the benzenesulphonylurea derivative | 2.0-50% |
| ammonium salt of 2-methoxy-3,6-dichlorobenzoic acid | 5.0-50% |
| surface-active substance | 1.0-5.0% |
| organic solvent | 10.0-40.0% |
| water | to 100%. |

2. Herbicidal composition according to claim 1, characterized in that it comprises 2-methoxy-3,6-dichlorobenzoic acid in the form of the dimethylammonium salt, diethylethanolammonium salt or ethylenediethanolammonium salt.

3. Herbicidal composition according to claim 1, characterized in that it comprises, as the surface-active substance, bis-polyoxyethylated alkylamines, sodium bis-(2-ethylhexyl)succinatosulphonate, monoalkyl ethers of polyethylene glycol based on fatty alcohol or alkylaryl ethers of polyethylene glycol or polypropylene glycol.

4. Herbicidal composition according to claim 1, characterized in that it comprises, as the solvent, triethylene glycol.

5. Method of combating weeds in cereal seed, in which the seed is processed with a herbicidal composition based on derivatives of benzenesulphonylurea and of benzoic acid, a surface-active substance, an organic solvent and water, characterized in that a herbicidal composition is used which comprises, as the benzenesulphonylurea derivative, an ammonium salt of the general formula (I) 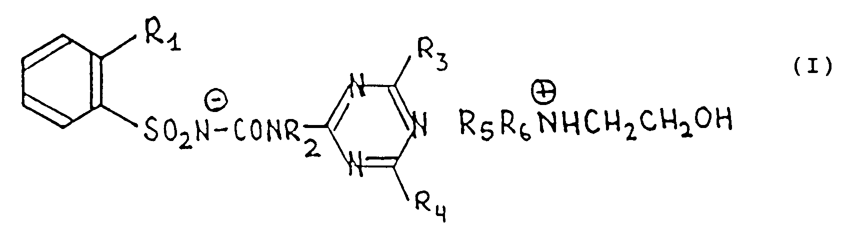
wherein R₁ = Cl, CO₂CH₃ or OCH₂CH₂Cl; R₂ = H or CH₃;
R₃ = CH₃ or N(CH₃)₂; R₄ = OCH₃ or ON=C(CH₃)₂;
R₅ = CH₃ or C₂H₅; R₆ = C₂H₅ or CH₂CH₂OH;
and, as the benzoic acid derivative, an ammonium salt of 2-methoxy-3,6-dichlorobenzoic acid of the general formula (II) 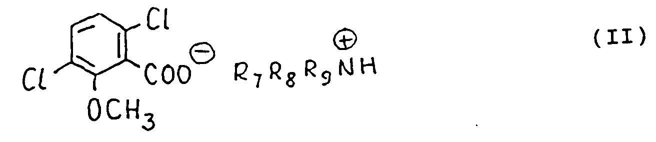
wherein R₇ = CH₃ or C₂H₅; R₈ = H or CH₂CH₂OH;
R₉ = C₂H₅ or CH₂CH₂OH; or
R₉ = CH₃, if R₇ = CH₃ and R₈ = H;
with the following composition of the components (in % by weight):
| | |
|---|---|
| ammonium salt of the benzenesulphonylurea derivative | 2.0-50% |
| ammonium salt of 2-methoxy-3,6-dichlorobenzoic acid | 5.0-50% |
| surface-active substance | 1.0-5.0% |
| organic solvent | 10.0-40.0% |
| water | to 100% |
the amount of active substance applied being 25 to 125 g/ha.

## Revendications

1. Composition herbicide pour l'utilisation dans des semis de céréales, constituée de dérivés de la benzènesulfonylurée et de l'acide dichlorobenzoïque, d'une substance tensioactive, d'un solvant organique et d'eau, caractérisée en ce qu'elle contient à titre de dérivé de la benzènesulfonylurée, un sel d'ammonium répondant à la formule générale (I) 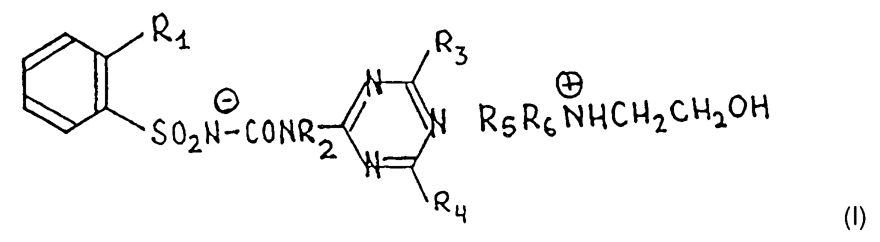
où R₁ = Cl, CO₂CH₃ ou OCH₂CH₂Cl ; R₂ = H ou CH₃ ;
R₃ = CH₃ ou N(CH₃)₂ ; R₄ = OCH₃ ou ON=C(CH₃)₂ ;
R₅ = CH₃ ou C₂H₅ ; R₆ = C₂H₅ ou CH₂CH₂OH ;
et à titre de dérivé de l'acide dichlorobenzoïque, un sel d'ammonium de l'acide 2-méthoxy-3,6-dichlorobenzoïque répondant à la formule générale (II) 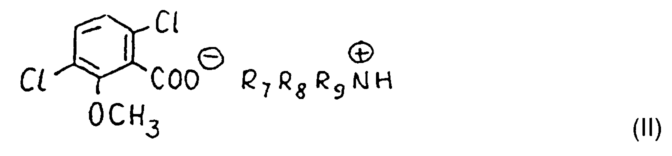
où R₇ = CH₃ ou C₂H₅ ; R₈ = H ou CH₂CH₂OH ;
R₉ = C₂H₅ ou CH₂CH₂OH ; ou
R₉ = CH₃ dans la mesure où R₇ = CH₃ et R₈ = H;
avec la composition suivante des composants (en % en masse) :
| | |
|---|---|
| sel d'ammonium du dérivé de la benzènesulfonylurée | 2,0 - 50 % |
| sel d'ammonium de l'acide 2-méthoxy-3,6-dichlorobenzoïque | 5,0 - 50 % |
| substance tensioactive | 1,0 - 5,0 % |
| solvant organique | 10,0 - 40,0 % |
| eau | jusqu'à 100 %. |

2. Composition herbicide selon la revendication 1, caractérisée en ce qu'elle contient de l'acide 2-méthoxy-3,6-dichlorobenzoïque sous forme du sel de diméthylammonium, de sel de diéthyléthanolammonium ou de sel d'éthylènediéthanolammonium.

3. Composition herbicide selon la revendication 1, caractérisée en ce qu'elle contient à titre de substance tensioactive des alkylamines bis-polyoxyéthylées, du bis(2-éthylhexyl)succinatosulfonate de sodium, un monoalkyléther de polyéthylèneglycol à base d'alcool gras, un alkylaryléther de polyéthylène- ou de polypropylèneglycol.

4. Composition herbicide selon la revendication 1, caractérisée en ce qu'elle contient à titre de solvant du triéthylèneglycol.

5. Procédé de lutte contre les mauvaises herbes dans des semis de céréales, dans lequel les semis sont traités au moyen d'une composition herbicide à base de dérivés de la benzènesulfonylurée et de l'acide benzoïque, d'une substance tensioactive, d'un solvant organique et d'eau, caractérisé en ce qu'on utilise une composition herbicide qui contient à titre de dérivés de la benzènesulfonylurée, un sel d'ammonium répondant à la formule générale (I) 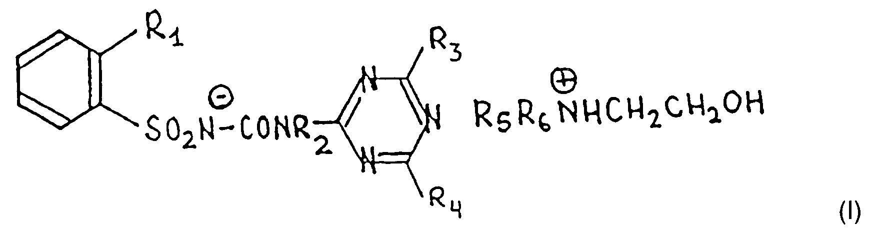
où R₁ = Cl, CO₂CH₃ ou OCH₂CH₂Cl ; R₂ = H ou CH₃ ;
R₃ = CH₃ ou N(CH₃)₂ ; R₄ = OCH₃ ou ON=C(CH₃)₂ ;
R₅ = CH₃ ou C₂H₅ ; R₆ = C₂H₅ ou CH₂CH₂OH ;
et à titre de dérivé de l'acide benzoïque, un sel d'ammonium de l'acide 2-méthoxy-3,6-dichlorobenzoïque répondant à la formule générale (II) 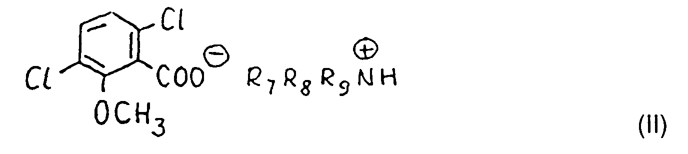
où R₇ = CH₃ ou C₂H₅ ; R₈ = H ou CH₂CH₂OH ;
R₉ = C₂H₅ ou CH₂CH₂OH ; ou
R₉ = CH₃ dans la mesure où R₇ = CH₃ et R₈ = H ;
avec la composition suivante des composants (en % en masse) :
| | |
|---|---|
| sel d'ammonium du dérivé de la benzènesulfonylurée | 2,0 - 50 % |
| sel d'ammonium de l'acide 2-méthoxy-3,6-dichlorobenzoïque | 5,0 - 50 % |
| substance tensioactive | 1,0 - 5,0 % |
| solvant organique | 10,0 - 40,0 % |
| eau | jusqu'à 100 %, |
la quantité à employer de la substance active s'élevant à 25 à 125 g/ha.
